# EUROPEAN PATENT APPLICATION

(11) **EP 3 722 723 A1**
(43) Date of publication of application: **14.10.2020**
(21) Application number: 19216325.1
(22) Date of filing: 13.12.2019
(51) Int. Cl.: F28D 7/14, F28D 7/00, F02C 7/14, F28D 21/00

(54) **CURVED HEAT EXCHANGER**

(30) Priority: 08.04.2019 US 201916378063
(71) Applicant: Hamilton Sundstrand Corporation, Charlotte, NC 28217-4578 (US)
(72) Inventor: RUIZ, Gabriel, Granby, CT Connecticut 06035 (US); MAYNARD, Michael, Somers, CT 06071 (US); DOE, Michael, Southwick, MA Massachusetts 01077 (US); HU, Michele, West Hartford, CT 06119 (US); BECENE, Ahmet T., West Simsbury, 06092 (US); FENG, Feng, South Windsor, CT Connecticut 06076 (US)
(74) Representative: Dehns

(57) **Abstract**

A heat exchanger system is disclosed herein that extends between a first component (66) and a second component (68). The heat exchanger system includes a hot flow path (70) configured to convey hot fluid between the first component and the second component, a cool flow path (74) configured to convey cool fluid, and a heat exchanger (78) located between the first component and the second component along the hot flow path and the cool flow path. The heat exchanger includes at least one curve to accommodate the hot flow path and is configured to reduce the temperature of the hot fluid by allowing the transfer of thermal energy from the hot fluid to the cool fluid.

## Description

### BACKGROUND

The present disclosure relates to heat exchangers and, more particularly, to a curved heat exchanger extending along hot and cool flow paths between two components.

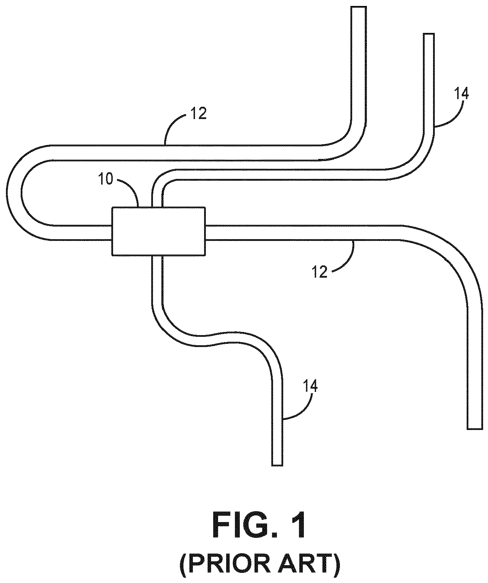

As shown in FIG. 1, prior art heat exchangers 10 are typically square or rectangular in shape, which limits the location within certain systems (such as a gas turbine engine or an airplane system) that heat exchanger 10 can be installed due to size restrictions. The limitations on the location of heat exchanger 10 drives the need for hot ducting 12 of hot fluid and cool ducting 14 of cool fluid to heat exchanger 10. Ducting 12 and 14 increases the system weight and increases the pressure drop of the hot and cool fluids as the hot and cool fluids need to travel farther through ducts 12 and 14 to heat exchanger 10.

### SUMMARY

A heat exchanger system extends between a first component and a second component. The heat exchanger system includes a hot flow path configured to convey hot fluid between the first component and the second component, a cool flow path configured to convey cool fluid, and a heat exchanger located between the first component and the second component along the hot flow path and the cool flow path. The heat exchanger includes at least one curve to accommodate the hot flow path and is configured to reduce the temperature of the hot fluid by allowing the transfer of thermal energy from the hot fluid to the cool fluid.

An airplane system includes a first component in need of thermal energy management, a second component in need of thermal energy management, a hot flow path extending from the first component to the second component and configured to convey a first fluid to aid in thermal energy management of the first component and the second component, a cool flow path configured to convey a second fluid, and a heat exchanger located along the hot flow path and the cool flow path. The heat exchanger has at least one bend to accommodate the hot flow path and is configured to provide thermal energy transfer between the first fluid and the second fluid.

### BRIEF DESCRIPTION OF THE DRAWINGS

FIG. 1 is a schematic of a prior art heat exchanger located between two components.
FIG. 2 is a partial cross-sectional view of a gas turbine engine.
FIG. 3 is a schematic of a heat exchanger system extending between two components.
FIG. 4 is a schematic of a second embodiment of the heat exchanger system extending between two components.

### DETAILED DESCRIPTION

A heat exchanger that can conform/fit within nontraditional installation locations in, for example, an airplane system such as a gas turbine engine is disclosed. The heat exchanger can be cylindrical (i.e., have a circular cross-sectional area) and curve/snake/bend to conform to a hot flow path extending between two components, thus minimizing the need for hot and cool fluid ducting to a location distant from the two components (to a location required by a traditional heat exchanger). The heat exchanger can even be configured to extend an entire distance between the one component (e.g., one turbine stage) and the other component (e.g., another turbine stage), eliminating the need for hot and/or cool fluid ducting. The reduction or elimination of hot and cool fluid ducting reduces the weight of the system because less ducting is needed, and also reduces the pressure drop of the hot and cool fluid ducts because the distance the hot and cool fluid needs to travel to the heat exchanger is reduced as compared to a traditional heat exchanger that has limited installation locations and therefore requires additional ducting to that heat exchanger location distant from the two components.

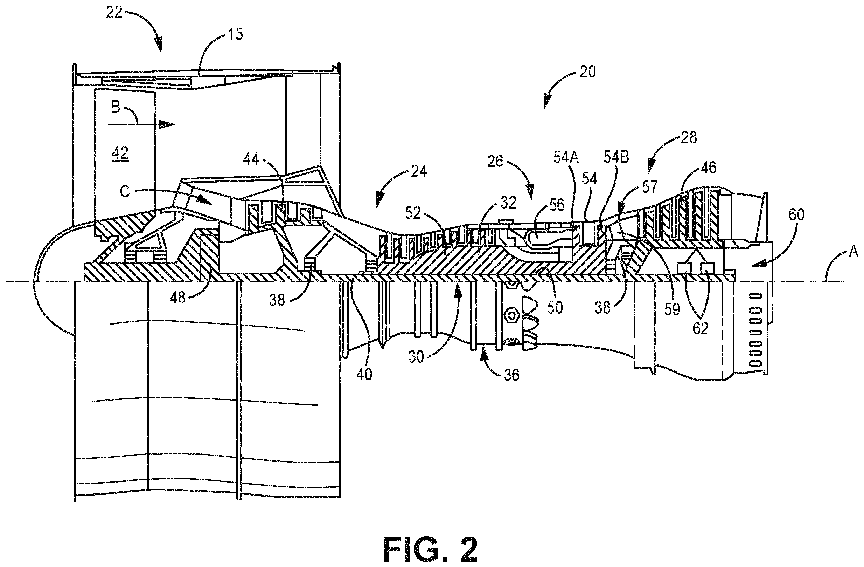

FIG. 2 is a partial cross-sectional view of gas turbine engine 20. Gas turbine engine 20 is disclosed herein as a two-spool turbofan that generally incorporates fan section 22, compressor section 24, combustor section 26, and turbine section 28. Alternative engines might include an augmentor section (not shown) among other systems or features. Fan section 22 drives air along bypass flow path B in a bypass duct defined within nacelle 15, while compressor section 24 drives air along core flow path C for compression and communication into combustor section 26 and then expansion through turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including one-spool and three-spool architectures.

Exemplary gas turbine engine 20 generally includes low speed spool 30 and high speed spool 32 mounted for rotation about engine central longitudinal axis (i.e., centerline) A relative to engine static structure 36 via several bearing systems 38. It should be understood that various bearing systems 38 at various locations may alternatively or additionally be provided, and the location of bearing systems 38 may be varied as appropriate to the application.

Low speed spool 30 generally includes inner shaft 40 that interconnects fan 42, first (or low) pressure compressor 44, and first (or low) pressure turbine 46. Inner shaft 40 is connected to fan 42 through a speed change mechanism, which in exemplary gas turbine engine 20 is illustrated as geared architecture 48 to drive fan 42 at a lower speed than low speed spool 30. High speed spool 32 includes outer shaft 50 that interconnects second (or high) pressure compressor 52 and second (or high) pressure turbine 54 (which includes first turbine stage 54A and second turbine stage 54B). Combustor 56 is arranged in exemplary gas turbine 20 between high pressure compressor 52 and high pressure turbine 54. Mid-turbine frame 57 of engine static structure 36 is arranged generally between high pressure turbine 54 and low pressure turbine 46. Mid-turbine frame 57 further supports bearing systems 38 in turbine section 28. Inner shaft 40 and outer shaft 50 are concentric and rotate via bearing systems 38 about centerline A.

The core airflow is compressed by low pressure compressor 44 then high pressure compressor 52, mixed and burned with fuel in combustor 56, and then expanded over high pressure turbine 54 and low pressure turbine 46. Mid-turbine frame 57 includes airfoils 59 which are in core airflow path C. Turbines 46 and 54 rotationally drive respective low speed spool 30 and high speed spool 32 in response to the expansion. It will be appreciated that each of the positions of fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48. Bearing compartment 60 is shown supports bearings 62 for the fan drive or low pressure turbine 46. It should be understood that the teachings of this disclosure would extend to a three turbine rotor engine wherein a dedicated turbine rotor drives the fan, such as through gear reduction 48.

Gas turbine engine 20 in one example is a high-bypass geared aircraft engine. In a further example, the bypass ratio for gas turbine engine 20 is greater than about six, with an example embodiment being greater than about ten. The geared architecture 48 can be an epicyclic gear train, such as a planetary gear system or other gear system, with a gear reduction ratio of greater than about 2.3, and low pressure turbine 46 can have a pressure ratio that is greater than about five. In one disclosed embodiment, the bypass ratio of gas turbine engine 20 is greater than about ten (i.e., 10:1), the fan diameter is significantly larger than that of low pressure compressor 44, and low pressure turbine 46 has a pressure ratio that is greater than about five (i.e., 5:1). The pressure ratio of low pressure turbine 46 is pressure measured prior to the inlet of low pressure turbine 46 relative to the pressure measured at the outlet of low pressure turbine 46 prior to an exhaust nozzle. Geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

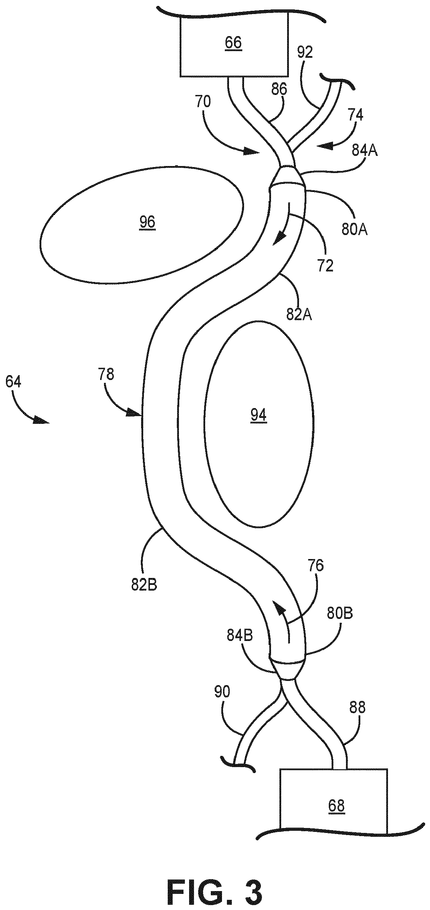

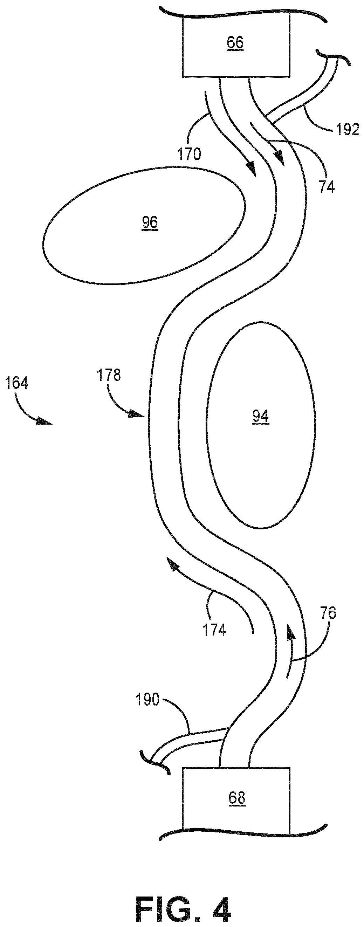

FIG. 3 is a schematic of heat exchanger system 64 extending between first component 66 and second component 68. Heat exchanger system 64 includes hot flow path 70 along which hot/first fluid 72 flows, cool flow path 74 along which cool/second fluid 76 flows, and heat exchanger 78 along hot flow path 70 and cool flow path 74. Heat exchanger 78 includes first end 80A, second end 80B, first bend 82A, second bend 82B, first header 84A, and second header 84B. Heat exchanger system 64 further includes first hot flow duct 86, second hot flow duct 88, first cool flow duct 90, and second cool flow duct 92. Also shown in FIG. 3 are third component 94 and fourth component 96. Heat exchanger system 64 can include other elements not expressly disclosed while still remaining within the scope of this disclosure. FIG. 4 includes heat exchanger system 164, which is similar to heat exchanger system 64 shown in FIG. 3 except that heat exchanger 178 extends an entire length of hot flow path 170 and cool flow path 174 between first component 66 and second component 68 and thus does not include a first hot flow duct and a second hot flow duct and reduces the length of first cool flow duct 190 and second cool flow duct 192.

Heat exchanger system 64 can be a standalone system between first component 66 and second component 68, or heat exchanger system 64 can be incorporated into a larger system, such as gas turbine engine 20 and/or another airplane system. Heat exchanger system 64 functions to provide thermal energy management to first component 66 (which may be first turbine stage 54A) and second component 68 (which may be second turbine stage 54B) through the utilization of hot/first fluid 72 and cool/second fluid 76. The functionality of heat exchanger system 64 is generally known in the art.

First component 66 and second component 68 can be elements in gas turbine engine 20 or another system that is in need of thermal energy management. For example, first component 66 can be a seal, airfoil, endwall, shroud, or disk in first turbine stage 54A, and second component 68 can be a seal, airfoil, endwall, shroud, or disk in second turbine stage 54B. First component 66 and second component 68 can be subject to elevated temperatures and require cooling fluid (such as air) to reduce the temperatures of components 66 and 68 to prevent deformation and/or failure. Additionally, first component 66 and second component 68 do not necessarily even need to be components and can just be positions in a higher level assembly. For efficiency, instead of providing different fluid (i.e., hot/first fluid 72) to each of first component 66 and second component 68, the same fluid is routed through both components 66 and 68 and that fluid (i.e., hot/first fluid 72) is cooled therebetween by heat exchanger 78. First component 66 and second component 68 can require different cooling/thermal energy management needs, and heat exchanger 78 can be tailored to meet those needs.

Hot flow path 70 extends between first component 66 and second component 68 and is configured to convey first fluid 72 to aid in thermal energy management of first component 66 and second component 68. Hot flow path 70 designates the route first fluid 72 flows between components 66 and 68, and other elements, such as first hot flow duct 86, heat exchanger 78, and second hot flow duct 88 can be positioned along hot flow path 70. Hot flow path 70 is designated as conveying "hot" or first fluid 72 because first fluid 72 can generally have a greater temperature when entering heat exchanger 78 than "cool" or second fluid 76. As shown in FIG. 3, hot flow path 70 (and heat exchanger 78) includes multiple bends to curve/snake around third component 94 and fourth component 96, which are located at least partially between first component 66 and second component 68. First fluid 72 can be any cooling fluid, including air, lubricant, water, or another fluid.

Cool flow path 74 is configured to convey cool/second fluid 76 through heat exchanger 78 to provide a thermal gradient within heat exchanger 78 to cool first fluid 72. Cool flow path 74 through heat exchanger 78 can be in an opposite direction to hot flow path 70, or heat exchanger 78 can be a cross-flow heat exchanger such that cool flow path 74 is substantially perpendicular in direction to hot flow path 70 through heat exchanger 78. Cool flow path 74 is "cool" because second fluid 76 generally has a lower temperature when entering heat exchanger 78 than "hot" or first fluid 72 when entering heat exchanger 78. Cool flow path 74 can include multiple bends to curve/snake around third component 94 and fourth component 96 to extend parallel (but in an opposite direction) to hot flow path 70. Cool flow path 74 can extend from (i.e., be provided by) a cool fluid source (such as the atmosphere surrounding gas turbine engine 20) or another system. Second fluid 76 can be any cooling fluid, including air, lubricant, water, or another fluid.

Heat exchanger 78 is located between first component 66 and second component 68 along hot flow path 70 and cool flow path 74. As shown in FIG. 3, heat exchanger 78 includes first bend 82A and second bend 82B to accommodate the route of hot flow path 70 and is configured to reduce the temperature of hot/first fluid 72 by providing the transfer of thermal energy from hot/first fluid 72 to cool/second fluid 76. Heat exchanger 78 can have a circular cross-sectional area/shape such that heat exchanger 78 is substantially cylindrical (while including multiple bends 82A and 82B), or heat exchanger 78 can have another cross-sectional area/shape that is able to accommodate bends as heat exchanger 78 extends along hot flow path 70. Heat exchanger 78 can have any cross-sectional configuration, including multiple hot subflow paths and multiple cool subflow paths forming a checkerboard, tubular, or another configuration. Heat exchanger 78 can include first header 84A at first end 80A to transition first fluid 72 from tubular flow within first component 66 or first hot flow duct 86 into heat exchanger 78 and second fluid 76 from heat exchanger 78 to tubular flow within second cool flow duct 92. Heat exchanger 78 can also include second header 84B at second end 80B to transition first fluid 72 from heat exchanger 78 to tubular flow within second hot flow duct 88 or second component 68 and second fluid 76 from tubular flow in first cool flow duct 92 to heat exchanger 78. First header 84A and second header 84B can have any configuration suitable to convey/transition first fluid 72 and second fluid 76 into and out of heat exchanger 78. Additionally, heat exchanger 78 can have configurations in which heat exchanger 78 does not include any headers or only one header.

Heat exchanger 78 can extend only a portion of a distance along hot flow path 70 between first component 66 and second component 68 and thus require first hot flow duct 86 to connect first component 66 to first end 80A of heat exchanger 78 and second hot flow duct 88 to connect second end 80B of heat exchanger 78 to second component 68. Alternatively, heat exchanger 78 can extend an entire length of hot flow path 70 between first component 66 and second component 68 and, in such a configuration, does not require first hot flow duct 86 and second hot flow duct 88. This configuration is shown in FIG. 4, which shows heat exchanger 178 extending an entire length of hot flow path 170 between first component 66 and second component 68 and thus eliminates the need for a first hot flow duct and a second hot flow duct and reducing the length of first cool flow duct 190 and a second cool flow duct 192.

Heat exchanger 78 is configured to include at least one bend/curve to accommodate a route of hot flow path 70 around third component 94 and/or fourth component 96, which are located at least partially between first component 66 and second component 68. As shown in FIG. 3, heat exchanger 78 has two bends to form an "S" shape (along with first hot flow duct 86 and second hot flow duct 88). Thus, with heat exchanger 78 able to include bends, heat exchanger 78 can be located in areas having limited space extending between first component 66 and second component 68 as opposed to traditional heat exchangers that require greater amounts of space so need to be located distant from first component 66 and second component 68 at a location with more space (away from third component 94 and/or fourth component 96). While shown as having two bends, heat exchanger 78 can have a variety of configurations, including only one bend or multiple bends of various radii of curvature to accommodate hot flow path 70. Heat exchanger 78 being able to accommodate the curved/windy hot flow path 70 allows for hot flow path 70 to be the shortest practical distance between first component 66 and second component 68 and does not require excessive length of hot flow ducts 86 and 88 (and cool flow ducts 90 and 92) to a heat exchanger that is distant from first component 66 and second component 68. The heat exchanger 78, however, can be designed with any length hot flow path 70 that a person of ordinary skill would consider to be appropriate for a particular application.

As mentioned above, first hot flow duct 86 extends from first component 66 to first end 80A of heat exchanger 78, and second hot flow duct 88 extends from second end 80B of heat exchanger 78 to second component 68. Hot flow ducts 86 and 88 convey first fluid 72 along at least a portion of hot flow path 70 unless heat exchanger 78 extends an entire distance/length of hot flow path 70 (as is shown in FIG. 4 with heat exchanger 178). Similarly, first cool flow duct 90 extends from a cool fluid source to second end 80B of heat exchanger 78, and second cool flow duct 92 extends from first end 80A of heat exchanger 78 downstream to the atmosphere, to the cool fluid source to be reused, or to another component.

Heat exchanger 78 is disclosed herein that can conform/fit within nontraditional installation locations in, for example, an airplane system such as gas turbine engine 20. Heat exchanger 78 can be cylindrical (i.e., have a circular cross-sectional area) and curve/snake/bend to conform to hot flow path 70 extending between components 66 and 68, thus minimizing the need for excessive lengths of hot flow ducts 86 and 88 and excessive lengths of cool flow ducts 90 and 92 to a location distant from components 66 and 68 (to a location of a traditional heat exchanger). Heat exchanger 78 can even be configured to extend an entire distance between first component 66 and second component 68 (as shown in FIG. 4), eliminating the need for flow ducts 86-92. The reduction or elimination of flow ducts 86-92 reduces the weight of heat exchanger system 64 because less ducting is needed as compared to a traditional heat exchanger, and also reduces the pressure drop of first fluid 72 and second fluid 76 because the distance first fluid 72 and second fluid 76 needs to travel to heat exchanger 78 is reduced as compared to a traditional heat exchanger that has limited installation locations and therefore requires additional ducting because the traditional heat exchanger is located distant from first component 66 and second component 68. Another improvement is the increase in fatigue life of heat exchanger 78 due the reduction of length of flow ducts 86-92, which allows for the increase in the stiffness of the supporting structures of heat exchanger 64 which in turn increases the natural frequencies of heat exchanger system 64 away from the exciting frequencies of gas turbine engine 20.

### Discussion of Possible Embodiments

The following are non-exclusive descriptions of possible embodiments of the present invention.

A heat exchanger system extends between a first component and a second component. The heat exchanger system includes a hot flow path configured to convey hot fluid between the first component and the second component, a cool flow path configured to convey cool fluid, and a heat exchanger located between the first component and the second component along the hot flow path and the cool flow path. The heat exchanger includes at least one curve to accommodate the hot flow path and is configured to reduce the temperature of the hot fluid by allowing the transfer of thermal energy from the hot fluid to the cool fluid.

The heat exchanger system of the preceding paragraph can optionally include, additionally and/or alternatively, any one or more of the following features, configurations and/or additional components:
The heat exchanger has a circular cross section.

The heat exchanger extends an entire distance of the hot flow path between the first component and the second component.

The heat exchanger extends only a portion of a distance of the hot flow path between the first component and the second component.

The hot flow path includes a first hot flow duct extending from the first component to a first end of the heat exchanger and a second hot flow duct extending from a second end of the heat exchanger to the second component.

A first header adjacent a first end of the heat exchanger with the first header configured to guide the hot fluid from the first hot flow duct into the heat exchanger and a second header adjacent the second end of the heat exchanger with the second header configured to guide the hot fluid from the heat exchanger into the hot flow duct.

The heat exchanger includes multiple curves to accommodate the route of the hot flow path.

The hot flow path extends a shortest practical distance between the first component and the second component.

The cool flow path extends in an opposite direction of the hot flow path through the heat exchanger.

The cool flow path includes a first cool flow duct extending between a cool fluid source and the heat exchanger and a second cool flow duct extending between the heat exchanger and the cool fluid source.

A gas turbine engine that includes the above heat exchanger.

The first component is in a first stage of a turbine section and the second component is in a second stage of the turbine section.

The heat exchanger is constructed utilizing additive manufacturing.

The heat exchanger includes at least one S-shaped configuration to accommodate the route of the hot flow path.

An airplane system includes a first component in need of thermal energy management, a second component in need of thermal energy management, a hot flow path extending from the first component to the second component and configured to convey a first fluid to aid in thermal energy management of the first component and the second component, a cool flow path configured to convey a second fluid, and a heat exchanger located along the hot flow path and the cool flow path. The heat exchanger has at least one bend to accommodate the hot flow path and is configured to provide thermal energy transfer between the first fluid and the second fluid.

The airplane system of the preceding paragraph can optionally include, additionally and/or alternatively, any one or more of the following features, configurations and/or additional components:
The heat exchanger has a circular cross-sectional shape.

The first component is in a first turbine stage and the second component is in a second turbine stage of a gas turbine engine.

The heat exchanger extends only a portion of a distance of the hot flow path between the first component and the second component.

The hot flow path includes a first hot flow duct that conveys the first fluid to the heat exchanger and a second hot flow duct that conveys the first fluid from the heat exchanger to the second component.

The heat exchanger includes multiple bends to curve around a third component in the airplane system that is at least partially located between the first component and the second component.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A heat exchanger system that extends between a first component (66) and a second component (68), the heat exchanger system comprising:
a hot flow path (70) configured to convey a first fluid between the first component and the second component;
a cool flow path (74) configured to convey a second fluid;
a heat exchanger (78) located between the first component and the second component along the hot flow path and the cool flow path, the heat exchanger having at least one curve (82) to accommodate the hot flow path and configured to reduce the temperature of the first fluid by allowing the transfer of thermal energy from the first fluid to the second fluid.

2. The heat exchanger system of claim 1, wherein the heat exchanger (78) has a circular cross section.

3. The heat exchanger system of claim 1 or 2, wherein the heat exchanger (78) extends an entire distance of the hot flow path between the first component and the second component, or wherein the heat exchanger extends only a portion of a distance of the hot flow path between the first component and the second component.

4. The heat exchanger system of claim 3, wherein the hot flow path comprises:
a first hot flow duct (86) extending from the first component to a first end of the heat exchanger; and
a second hot flow duct (88) extending from a second end of the heat exchanger to the second component.

5. The heat exchanger system of claim 4, further comprising:
a first header (84A) adjacent a first end of the heat exchanger, the first header configured to guide the first fluid from the first hot flow duct into the heat exchanger; and
a second header (84B) adjacent the second end of the heat exchanger, the second header configured to guide the first fluid from the heat exchanger into the hot flow duct.

6. The heat exchanger system of any preceding claim, wherein the heat exchanger includes multiple curves (82) to accommodate the route of the hot flow path.

7. The heat exchanger system of any preceding claim, wherein the hot flow path extends a shortest practical distance between the first component and the second component, and/or wherein the cool flow path extends in an opposite direction of the hot flow path through the heat exchanger.

8. The heat exchanger system of any preceding claim, wherein the cool flow path comprises:
a first cool flow duct (90) extending between a cool fluid source and the heat exchanger; and
a second cool flow duct (92) extending between the heat exchanger and the cool fluid source.

9. The heat exchanger system of and preceding claim, wherein the heat exchanger is constructed utilizing additive manufacturing.

10. The heat exchanger system of any preceding claim, wherein the heat exchanger includes at least one S-shaped configuration to accommodate the route of the hot flow path.

11. A gas turbine engine comprising:
the heat exchanger system (64) of any preceding claim.

12. The gas turbine engine of claim 11, wherein the first component is in a first stage of a turbine section and the second component is in a second stage of the turbine section.

13. An airplane system comprising:
a first component (66) in need of thermal energy management; and
a second component (68) in need of thermal energy management; and
a heat exchanger system as claimed in any of claims 1 to 10, the hot flow path extending from the first component to the second component and configured to convey the first fluid to aid in thermal energy management of the first component and the second component.

14. The airplane system of claim 13, wherein the heat exchanger includes multiple bends (82) to curve around a third component (94, 96) in the airplane system that is at least partially located between the first component and the second component.
